(19)

**Europäisches Patentamt**

**European Patent Office**

**Office européen des brevets**

(11) **EP 4 607 060 A1**

(12) **EUROPEAN PATENT APPLICATION**

(43) Date of publication:
**27.08.2025 Bulletin 2025/35**

(21) Application number: **24159301.1**

(22) Date of filing: **23.02.2024**

(51) International Patent Classification (IPC):
**F16H 7/02** (2006.01)

(52) Cooperative Patent Classification (CPC):
**F16H 7/02;** F16H 7/12; F16H 2007/0865;
F16H 2007/0874

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Koninklijke Philips N.V.**
**5656 AG Eindhoven (NL)**

(72) Inventors:
• **DE BOER, Jacob**
**Eindhoven (NL)**
• **PATIL, Harshal**
**Eindhoven (NL)**

(74) Representative: **Philips Intellectual Property & Standards**
**High Tech Campus 52**
**5656 AG Eindhoven (NL)**

(54) **FAILSAFE BELT FORCE TRANSMISSION SYSTEM**

(57) A force transmission system (100) comprising: a first pulley arrangement (1) coupleable to a force or torque generating device (81); a second pulley arrangement (11) coupleable to a force receiving device (91); a revolving first belt (27) and a revolving second belt (37); wherein the first pulley arrangement (1) and the second pulley arrangement (11) are coupleable with each other by the first belt (27) and the second belt (37); wherein the force transmission system (100) is adapted to assume a first configuration (C1) or a second configuration (C2); wherein, in the first configuration (C1), the first pulley arrangement (1) and the second pulley arrangement (11) are operatively coupled with each other by the first belt (27), and the first pulley arrangement (1) and the second pulley arrangement (11) are non-operatively coupled with each other by the second belt (37); and wherein, in the second configuration (C2), the first pulley arrangement (1) and the second pulley arrangement (11) are operatively coupled with each other by the second belt (37), and the first pulley arrangement (1) and the second pulley arrangement (11) are not coupled with each other or not operatively coupled with each other by the first belt (27).

Fig. 1

EP 4 607 060 A1

**Description**

FIELD OF THE INVENTION

The present invention relates to a force transmission system, a device comprising a force transmission system, a method for manufacturing a force transmission system, and a use of a force transmission system.

BACKGROUND OF THE INVENTION

Industrial and medical systems are often driven by motors, e.g. electrical motors, which are adapted to output a force or movement for moving corresponding downstream elements such as one or more mechanical actuators in a rotational or linear manner. Force transmission systems may be provided in between to couple an output of the motor and the input of the mechanical actuator. A failure of such a force transmission system, for instance a breakage or malfunction of the force transferring parts may lead to severe consequences. For instance, an unintended stop or an undesired movement of the mechanical actuator may not only cause damages of the system but may also lead to injuries of persons that are in the vicinity of the system. As of now, solutions to mitigate or prevent such a failure scenario are often complex, expensive and require high maintenance. There is accordingly a need for force transmission systems which ensure a failure safe operation of such systems.

Thus, it is an object of the invention to provide an improved system and method, which addresses the above noted drawbacks of the prior art.

SUMMARY OF THE INVENTION

The problem is at least partially solved or alleviated by the subject matter of the independent claims of the present disclosure, wherein further preferred embodiments are incorporated in the dependent claims.

The present invention relates to a force transmission system comprising a first pulley arrangement coupleable to a force or torque generating device and a second pulley arrangement coupleable to a force receiving device.

The force transmission system comprises that the first pulley arrangement and the second pulley arrangement are coupleable with each other by a revolving first belt and a revolving second belt.

Further, the force transmission system is adapted to assume a first configuration or a second configuration, wherein, in the first configuration, the first pulley arrangement and the second pulley arrangement are operatively coupled with each other by the first belt.

Further, in the first configuration, the first pulley arrangement and the second pulley arrangement are non-operatively coupled with each other by the second belt.

Further, in the second configuration, the first pulley arrangement and the second pulley arrangement are operatively coupled with each other by the second belt.

Further, in the second configuration, the first pulley arrangement and the second pulley arrangement are not coupled with each other or not operatively coupled with each other by the first belt.

Thus, a force transmission system can be provided which may allow for a failsafe operation in case a malfunction or damages at the first belt or the main pulleys occur. In particular, a reliable backup safety system may be provided in case the first belt has a malfunction or is damaged and is no longer able to transmit no or no substantial forces or loads from the first pulley arrangement to the second pulley arrangement. By employing a pulley arrangement comprising first and second belts, a simple to implement, cheap and reliable backup safety system may be provided. Furthermore, the proposed belt and pulley system may allow for a very accurate positioning of any parts involved and may provide a low noise operation. Also, an easy alignment of the parts may be achieved.

One or more force or torque generating device may be provided, which may include any kind of propelling systems, such as one or more motors, in particular electrical motors, which may supply a movement or force, for instance a translational movement or force or a rotational movement or torque. Thus, the force or torque generating device may accordingly apply a (mechanical) load to the force transmission system, which may be carried in the first configuration essentially by the first belt, and which may be carried in the second configuration essentially by the second belt. During operation of the force transmission system, the loads may accordingly lead to respective tensions of the first and second belts.

Further, one or more force receiving device may be provided. The force receiving device may include any kind of suitable force or movement receiving elements that may be propelled or driven by a force or movement provided by the force or torque generating device. The force receiving device may include for instance any kind of hydraulic, pneumatic, electric etc. devices and may include suitable gears for transferring and adapting a force or movement received from the second pulley arrangement. The force receiving device may include for instance translationally movable elements such as linear actuators comprising a rack and pinion gear, which may allow to linearly move or displace a downstream element along one or more linear directions. Non-limiting examples of respective elements or loads may include a patient bed or a gantry arm of a medical x-ray system, which may be accordingly lifted or lowered or moved in one or more translational or lateral directions etc. Thus, the force receiving device may accordingly apply a (mechanical) load to the force transmission system, which may be carried in the first configuration essentially by the first belt, and which may be carried in the second configuration essentially by the second belt. During operation of the force transmission system, the loads may accordingly lead to respective tensions of the first and second belts. Likewise, the force receiving device may additionally or alternatively include rotationally moving actuators, which may accordingly allow to rotatably move or displace a downstream element along a one or more rotating directions. For instance, the above noted patient bed or the gantry arm may be rotated around one or more axis.

As will be set forth in greater detail below, a first pulley arrangement may comprise one or more main pulleys and a second pulley arrangement may comprise one or more auxiliary pulleys adapted to receive the respective one or more first and second belts. The belts may comprise any suitable material such as for instance a rubber, leather, metal or plastic material, which may be additionally reinforced with fibers, e.g. carbon or metal fibers. The belts may be additionally provided with protrusions or teeth at their inner surface, which may be adapted to engage or interlock with corresponding teeth arranged at the outer surface of the pulleys to increase a force transmission between the pulleys and the belts.

Thus, the first pulley arrangement may be adapted to engage one or more revolving first belts and the second pulley arrangement may be adapted to engage one or more revolving second belts. A revolving belt in the present disclosure may be understood as a belt that is formed and arranged to circulate along the respective first and second pulleys. The pulleys may be accordingly adapted to rotate along one or more rotational axis to enable a movement of the belt contacting the pulleys.

The force transmission system may be adapted to operate in a first configuration with respect to the coupling of the first and second pulley arrangements via the first and second belts. In the first configuration, an operative coupling between the first pulley arrangement and the second pulley arrangement may be provided. In the understanding of the present disclosure, an operative coupling of the first pulley arrangement and the second pulley arrangement by the first belt means that a rotational force or torque may be transmitted from the first pulley arrangement to the second pulley arrangement via the first belt. In other words, the second pulley arrangement may be propelled or driven by the rotational movement of the first pulley arrangement, which movement is accordingly transferred via the first belt.

A non-operative coupling of the first pulley arrangement and the second pulley arrangement by the second belt means, in the understanding of the present disclosure, that almost no rotational force or torque may be transmitted from the first pulley arrangement to the second main pulley arrangement via the second belt. In other words, the second pulley arrangement may still drive the first pulley arrangement, however without transferring substantial forces or torques. Thus, in a non-operatively coupled condition, substantially no load may be transferred via the second belt, but the second belt may only run synchronized with the first belt.

The force transmission system may be further adapted operate in a second configuration, wherein, contrary to the first configuration, an operatively coupling between the first pulley arrangement and the second pulley arrangement via the second belt may be provided. Accordingly, a rotational force or torque may be transmitted from the first pulley arrangement to the second pulley arrangement via the second belt. In other words, the second pulley arrangement may be propelled or driven by the rotational movement of the first pulley arrangement, which movement is accordingly transferred via the second belt. Thus, force transmission system may be accordingly adapted to switch or change from a first configuration to a second configuration, for instance during the operation in dependence of the condition of the main pulley arrangement and the first belt. In some embodiments, a malfunction or breakage of the first belt may be detected via an additional servo control. However, also different malfunction or detection devices, such as any kind of suitable sensor, for instance optical sensors etc. may be employed.

In some embodiments, the force transmission system may be also adapted to switch back or change from the second configuration to the first configuration. In an example, the force transmission system may operate regularly at the first configuration. When a malfunction of the belt occurs, such as for instance a tearing or braking of said belt, the second belt, which was previously only non-operatively coupled, takes over the force transmission from the first pulley arrangement to the second pulley arrangement in the second configuration. The first belt may be accordingly repaired or exchanged, and the system may assume and operate again in the first configuration when the first belt is fully operable.

Similar as explained with respect to the second belt, a non-operative coupling of the first pulley arrangement and the second pulley arrangement by the first belt means, in the understanding of the present disclosure, that almost not rotational force or torque may be transmitted from the first pulley arrangement to the second main pulley arrangement via the first belt. In other words, the first pulley arrangement may drive the second pulley arrangement, however without transferring substantial forces or torques. Thus, in a non-operatively coupled condition, substantially no load may be transferred via the first belt. Further, in the second configuration, an operative coupling the first pulley arrangement and the second pulley arrangement by the second belt means that a rotational force or torque may be transmitted from the first pulley arrangement to the second pulley arrangement via the second belt. In other words, the second pulley arrangement may be propelled or driven by the rotational movement of the first pulley arrangement, which movement is accordingly transferred via the second belt. Thus, in the second configuration, the second belt may take over operation from a damaged or fully teared first belt. Accordingly, any loads acting on the force transmission system may be suitably carried by the second belt and a motion, force or torque provided by the force generating device can be still transmitted to the force receiving device via the force transmission system.

In a preferred embodiment, in the first configuration, the first belt is provided with a first pre-tension and the second belt is provided with a second pre-tension, wherein the second pre-tension is lower than the first pre-tension.

Thus, a long durability of the second belt may be achieved and a safe operation of the force transmission system may be ensured for a longer time. As will be appreciated, the load or force that may be transferred during operation of the belt and pulley system may generally depend on the value of pre-tension of the belt. The pre-tension of the first belt may be set only as high as necessary to allow a proper load transfer between the pulley arrangements. If a high pre-tension is provided, the first belt may be enabled to transfer a large force or load from the first pulley arrangement to the second pulley arrangement. The lower pre-tension of the second belt may be accordingly chosen such that no or only negligible forces or loads may be transferred from the first pulley arrangement to the second pulley arrangement via the second belt, as long as the first belt with the higher pre-tension is in operation. The lower pre-tension may accordingly allow for a longer lifetime of the second belt because wear and stress to the second belt in the first configuration is reduced. However, considering a malfunction or damage of the first belt, the second pre-tension may be selected accordingly to allow a proper take-over of the operation. Hence, a transfer of forces or loads from the first pulley arrangement to the second rearrangement may be allowed at least temporarily or partially via the second belt.

In a preferred embodiment, the force transmission system further comprises a first roller arrangement comprising a first roller contacting the first belt for applying a first pre-load to the first belt to provide the first pre-tension, and a second roller arrangement comprising a second roller contacting the second belt for applying a second pre-load to the second belt to provide the second pre-tension.

Thus, suitable pre-tensions for the first and second belts may be easily set and/or flexibly adapted as desired. The first roller arrangement may comprise one or more first rollers. The first roller may be accordingly formed and arranged for contacting a revolving first belt to increase the tension of the first belt. For instance, a force may be applied from the first roller in a direction essentially perpendicular to movement direction of the belt. Thus, the first roller may apply a respective force or preload to the first belt to create a desired first pre-tension. The first roller rotation axis may have the same orientation or a different orientation as the rotation axis of the pulleys of the first and/or second pulley arrangements. The first roller may rotate in the first belt rotation direction, for instance when the first roller contacts an inner side of the first belt, or the first roller may rotate against the belt rotation direction, for instance when the first roller contacts an outer side of the first belt. In some embodiments, the first roller may be set to apply a fixed preload. In other embodiments, the first roller may allow to adapt the preload before or during the operation of the force transmission system.

The second roller arrangement may also comprise one or more second rollers. The second roller may be accordingly formed and arranged for contacting a revolving second belt to increase the tension of the second belt. For instance, a force may be applied from the second roller in a direction essentially perpendicular to the movement direction of the belt. Thus, the second roller may apply a respective force or preload to the second belt to create a desired second pre-tension. The second roller rotation axis may have the same orientation or a different orientation as the rotation axis of the pulleys of the first and/or second pulley arrangements. The second roller may rotate in the second belt rotation direction, for instance when the second roller contacts an inner side of the second belt, or against the second belt rotation direction, for instance when the second roller contacts an outer side of the second belt. In some embodiments, the second roller may be set to apply a fixed preload. In other embodiments, the second roller may allow to adapt the preload before or during the operation of the force transmission system. The first and second rollers may be arranged at the same locations with at the first and second belts or may be arranged at different, e.g. opposite, locations. The first and second rollers may rotate freely and may accordingly not contribute to the force transmission from the first pulley arrangement to the second pulley arrangement.

In a preferred embodiment, the first pre-tension is in a range of 1 N to 120 N, preferably in a range of 3 N to 60 N, more preferably in a range of 6 N to 30 N, for example about 12 N and/or the second pre-tension is in a range of 0.1 N to 10 N, preferably in a range of 0.5 N to 5 N, more preferably in a range of 1 N to 2 N, for example about 1.5 N

Thus, by providing distinct first and second pre-tensions in the above noted ranges, a particularly good force transmission via the first belt may be provided while the second belt may be suitably protected from undesirably high wear. Hence, an increased longevity of the proposed safety backup system may be achieved. It will be appreciated that the skilled person may determine and select suitable force values dependent on the individual configuration of the force transmission system under the premise that the second pre-tension may be set lower than the first pre-tension. Generally, the force $F_v$ of pre-tension for a two-shaft drive may be determined and set e.g. via the formulas (I) to (III):

$$M_i = F_c \cdot \frac{d_i}{2} \text{ and } P_i = 2\pi M_i n_i \qquad \text{(I)}$$

$$F_C = \frac{2M_i}{d_i} = \frac{P_i}{\pi d_i n_i} \qquad \text{(II)}$$

$$F_V = A_t \cdot F_C \qquad \text{(III)}$$

wherein $F_V$ is a pre-tensional force, $A_t$ is a pulley/belt teeth factor, $F_C$ is a maximum circumferential force (also referred to as "effective force"), $M_i$ is a torque applied to an input pulley to which the force is applied from the force or torque generating device (e.g. the first main pulley), $P_i$ is the power, $d_i$ is the diameter of the input pulley and $n_i$ is a rotational speed of the input pulley.

In a preferred embodiment, the first pulley arrangement comprises a first main pulley and a first auxiliary pulley, wherein the second pulley arrangement comprises a second main pulley and a second auxiliary pulley, wherein the first main pulley and the first auxiliary pulley are coupleable via the first belt, and wherein the second main pulley and the second auxiliary pulley are coupleable via the second belt.

Thus, a robust and easy to implement pulley and belt force transmission system having a durable and easy to implement safety backup system can be provided. The first pulley arrangement may also comprise more than one first main pulley, more than one first auxiliary pulley, more than one second main pulley and/or more than one second auxiliary pulley, which may be accordingly coupled to the first belt and/or the second belt dependent on the configuration of the force transmission system. One or more of the pulleys may comprise teeth or protrusions at their outer lateral surface for interlocking with respective teeth or protrusions arranged at an inner side of the belts to increase a contact surface and thus allowing an improved force transmission between the belt and the pulleys.

The outer lateral surface of the pulleys may comprise a running surface, at which the belt contacts the pulley, and along which the belt may be guided. The running surface may be delimited at the edges by rims or protrusions, which may improve a guidance of the belt, for instance to prevent a slipping of the belt from the pulley. The pulleys may comprise any suitable material which may provide sufficient mechanical stability to allow for the intended force transmission, e.g. any suitable metal, plastic, carbon and/or composite materials etc.

Each pulley may define a rotation axis. The orientation of the rotation axis may be fixed or may be variably set before or during operation. The rotation axis of the pulleys may be aligned with respect to each other, for instance as described further below, or may be arranged individually in different orientations, dependent on the configuration of the belt and pulley force transmission system. The rotation direction of each element may be set as desired in a clockwise (CW) or counter-clockwise (CCW) direction. The interaction between the belt of the pulley may be in particular free of a play. The rotational movement of one or more of the pulleys may controlled by respective one or more rotational controls, e.g. angular controls, which may determine a positioning or a rotational velocity of the pulley. The first pulleys and the second pulleys may have the same or different diameters dependent on the input and output torques and/or the input and output velocities of the pulleys to be achieved.

The pulleys may comprise a height perpendicular to their diameter, which may essentially correspond to a height of the corresponding belt to be engaged. In some embodiments, the height may be in a range of 2 mm to 250 mm, more preferably in a range of 4 mm to 125 mm, most preferably in a range of 8 mm to 50 mm, for instance about 11 mm.

In a preferred embodiment, the first main pulley and the first auxiliary pulley are aligned with each other along a common first rotation axis, and/or the second main pulley and the second auxiliary pulley are aligned with each other along a common second rotation axis.

Thus, by sharing the same rotation axis, a simple and robust backup system may be provided. In particular, in case of a malfunction of the first and second main pulleys or the first belt, the first and second auxiliary pulleys and the second belt may immediately take over the operation of the force transmission system by employing essentially the same configuration as the main pulleys and the first belt.

In some embodiments, the first and second rotation axis may be oriented parallel, i.e. they may be oriented in a same direction, for instance a vertical direction. Accordingly, the first and second belts may run parallel and synchronized to each other. However, the present invention is not limited thereto and the first and second rotation axis may also be provided in different orientations. The first and second rotation axis may be fixed during operation or may be variable, as desired.

In a preferred embodiment, the first main pulley and the first auxiliary pulley are arranged in a stacked manner, and/or the second main pulley and the second auxiliary pulley are arranged in a stacked manner.

Thus, a particular compact arrangement of the first and/or second pulleys may be achieved. For instance, the first main pulley and the first auxiliary pulley may be stacked upon each other in a first direction, which may be a vertical direction. In this case, an upper surface of the first auxiliary pulley may face a lower surface of the first main pulley. In some embodiments, the first auxiliary pulley and the first main pulley may contact each other and rotate together. However, in different embodiments, the first auxiliary pulley and the first main pulley may be adapted to rotate independently from another.

Likewise, for instance, the second main pulley and the second auxiliary pulley may be stacked upon each other in the first direction. In this case, an upper surface of the second auxiliary pulley may face a lower surface of the second main pulley. In some embodiments, the second auxiliary pulley and the second main pulley may contact each other and rotate together. However, in different embodiments, the second auxiliary pulley and the second main pulley may be adapted to rotate independently from another.

In a preferred embodiment, the first main pulley and the first auxiliary pulley form a first shaft reception for receiving a rotational output shaft of the force or torque generating device, and/or the second main pulley and the second auxiliary pulley form a second shaft reception for receiving a rotational input shaft of the force receiving device.

Thus, a force may be suitably transferred from a rotational output shaft of the force or torque generating device to both, the first main pulley and the first auxiliary pulley. Likewise, a force may be suitably transferred from the second main pulley and the second auxiliary pulley to a rotational input shaft of the force receiving device. This may also further increase compactness of the force transmission system. The respective first and second shaft reception may include one or more recesses, such as through holes adapted snuggly receive and hold a respective shaft of the corresponding force or torque generating or force receiving device. In some embodiments, the first main pulley and the first auxiliary pulley may together form a through hole, into which a rotational output shaft of a force or torque generating device may be inserted. Likewise, in some embodiments, the second main pulley and the second auxiliary pulley may together form a through hole, into which a rotational input shaft of a force receiving device may be inserted. The first and second shaft reception may be adapted to removably hold the respective shafts. Thus, an exchange of the components of the force transmission system may be facilitated.

In a preferred embodiment, the first main pulley and the first auxiliary pulley have a same first pulley diameter, the second main pulley and the second auxiliary pulley have a same second pulley diameter, wherein the first pulley diameter is smaller than the second pulley diameter.

Thus, a proper increase of the output torque and reduction of the rotation velocity at the second pulleys may be achieved. Further, providing the same diameters may allow for a simplified configuration and set-up of the backup system formed by the first and second auxiliary pulleys because only one diameter is to be set for each of the first and second pulleys.

In some embodiments, the second pulleys may have a diameter in a range of 10 mm to 1000 mm, preferably in a range of 50 mm to 500 mm, more preferably in a range of 80 mm to 150 mm, for instance about 95 mm. Further, in some embodiments, the first pulleys may have a diameter in a range of 3 mm to 300 mm, preferably in a range of 10 mm to 100 mm, more preferably in a range of 20 mm to 50 mm, for instance about 28 mm.

In some embodiments, the first pulley diameter may be 5% to 85% of the second pulley diameter, more preferably 10% to 65% of the second pulley diameter, most preferably 15% to 45% of the second pulley diameter, for instance about 30% of the second pulley diameter.

The invention further relates to a device comprising a force or torque generating device, a force receiving device, and the force transmission system according to the present invention.

Thus, a device can be provided which may allow for a failsafe operation even when a malfunction or damage at the first belt or one or more of the main pulleys occurs. By employing pulley arrangements comprising first and second belts, a simple to implement, reliable and low-maintenance backup safety system may be accordingly provided. The above explanations regarding any features and advantages concerning the force transmission system likewise apply to the device comprising said force transmission system. Also, more than one force transmission system may be provided in the device according to the present invention. For instance, one force transmission system may be provided at the device to enable a linear movement of a subsequent element and another force transmission system may be provided at the same device to enable a rotational movement of the same or a different subsequent element.

In a preferred embodiment, the device is a medical device, and in particular a medical imaging device.

Thus, a particular reliable and failsafe medical device can be provided. A medical device may include any device employed for investigating medical targets, for instance based on optical or laser devices, x-ray devices, magnetic resonance devices etc. A medical imaging device may accordingly include any devices for imaging medical targets such as x-ray imaging, magnetic resonance imaging, PET imaging etc. For instance, the medical imaging device may be a C-arm x-ray imaging device comprising a height positioning module which may allow to move the C-arm to different height positions. The height positioning module may accordingly comprise the force transmission system as described herein, wherein the force or torque generating device may be an electric motor. The force receiving device may comprise a rotational input shaft (93), for instance in form of a spindle, that may be driven to translationally lift or lower an attached carriage, for instance in form of a tube, carrying the C-arm. Likewise, also rotational movements of the C-arm may be accordingly provided, which thus, in combination with the linear movement may allow a full free movement of the C-arm along and around multiple axis. The free movement provided by the force transmission system may be employed for any parts for which a respective safe and precise movement may be desired.

In a preferred embodiment, the force or torque generating device comprises a motor and a rotational output shaft for transferring a rotational movement from the motor to the first pulley arrangement, wherein the motor is mechanically coupled with the first pulley arrangement via the rotational output shaft, and the force receiving device comprises a rotational input shaft for transferring a rotational movement from the second pulley arrangement to the force receiving device.

Thus, a particular precisely controllable and reliable failsafe device may be provided. The motor may be in some embodiments an electric motor or servo motor. The rotations of the input shaft and the output shaft may be transferred in a play-free manner and may be controlled by a servo control allowing to determine distinct rotational positions, e.g. of the pulleys and/or the shafts. The control of the rotational movement of the input shaft may allow providing a distinct rotation of one or more subsequent downstream elements. In some embodiments, the rotational movement of the input shaft may lead to a rotational movement of the subsequent downstream elements. In some embodiments one or more suitable gears may be placed in between the input shaft and the subsequent elements. Or the rotational movement of the input shaft may be translated into a linear movement, e.g. via a rack and pinion gear. Thus, a translational or lateral displacement of one or more subsequent elements may be provided.

In a preferred embodiment, the device includes a height position module comprising: a movable carriage, which is mechanically connected to the rotational input shaft such that a rotational movement of the rotational input shaft causes a translational movement of the carriage, and wherein the carriage is adapted to carry a load similar to a C-arc assembly.

Thus, the proper positioning of a load connected to the movable carriage may be achieved while at the same time a reliable force transmission safety backup system is provided. In some embodiments, the carriage may be a tube. In some embodiments, the rotational input shaft may be a spindle. The rotational input shaft may comprise a threaded portion which is mechanically connected to the second pulley arrangement. A mechanical connection may be a direct connection or may be an indirect connection with further elements arranged in between. The movable carriage may comprise a corresponding thread, which may engage the thread of the rotational input shaft. Thus, a rotational movement of the rotational input shaft may be translated to a translational movement of the tube. Accordingly, for instance if the translationally movable carriage is arranged in a vertical orientation, a rotation of the rotational input shaft may accordingly raise or lower the movable carriage and respective loads carried by the carriage. Respective loads carried by the carriage may be for instance a C-arc assembly or arrangement, which may comprise a C-arm or arc having an x-ray source and an x-ray detector attached thereto. Thus, the C-arm may be accordingly lowered or lifted by the height positioning module. In case of a malfunction or tearing of the first belt, the second belt takes over operation, thus allowing to lift or lower the C-arm. The device may also comprise further force transmission systems, which may allow to move the C-arm around one or more rotational axis, or which may allow to move the C-arm in a plane perpendicular to the vertical direction, which may be referred to as a horizontal movement. Each of the movements may be accordingly secured by one or more safety backup systems as described herein each comprising a force transmission system having a respective second belt as backup.

The invention further relates to a method of manufacturing a force transmission system according to the present invention, comprising the steps of providing a first pulley arrangement, providing a second pulley arrangement, coupling the first pulley arrangement and the second pulley arrangement with each other by a revolving first belt and a revolving second belt, wherein the first belt is provided with a first pre-tension and the second belt is provided with a second pre-tension, wherein the second pre-tension is lower than the first pre-tension.

Thus, a manufacturing method of a force transmission system according to the present invention may be provided, which is simple to implement and easy to adapt to the needs and requirements of the force transmission system. The features and advantages explained in this disclosure with respect to the force transmission system and the device according to the present invention similarly apply to the method of manufacturing according to the present invention.

The invention further relates to a use of a force transmission system, comprising the steps of providing of a force transmission system according to the present invention, and changing a configuration of the force transmission system from the first configuration to the second configuration.

Thus, a use of a force transmission system is provided which is particularly safe, reliable and long-lasting and further allows a precise control of the movement of the single parts and a precise force transmission. A change of the configuration may be induced automatically without any further user or control input, but only based on the pre-set configuration of the first and second belts, as described in this disclosure. The features and advantages explained herein with respect to the force transmission system, the device and the manufacturing method of a force transmission system according to the present invention similarly apply to the use according to the present invention.

Further features, examples, and advantages will become apparent from the following detailed description of preferred embodiments and the accompanying figures.

BRIEF DESCRIPTION OF THE DRAWINGS

For a better understanding of the present invention, and to illustrate its practicality, figures are provided in the following and reference is made thereto. It should be understood that the figures represent only exemplary embodiments and thus in no way limit the scope of the claimed invention. Identical or like-acting elements are indicated throughout by the same reference signs. Any reference signs in the claims should not be construed as limiting the scope of the claims. The figures are merely schematic representations and serve only to illustrate examples of the disclosure. Further, as used herein, a hyphenated form of a reference sign refers to a specific embodiment of an element and the unhyphenated form of the reference numeral refers to the collective element. For example, a device "59-1" refers to an instance of a device class that can be collectively referred to as device "59" and each of which can be generically referred to as device "59".

In the accompanying drawings:

Fig. 1 schematically illustrates a device comprising an embodiment of a force transmission system according to the present invention;
Fig. 2 schematically illustrates a device comprising an embodiment of a force transmission system according to the present invention;
Fig. 3 schematically illustrates a device comprising an embodiment of a force transmission system according to the present invention;
Fig. 4 schematically illustrates an embodiment of a method according to the present invention;
Fig. 5 schematically illustrates an embodiment of a use according to the present invention.

DETAILED DESCRIPTION OF EMBODIMENTS

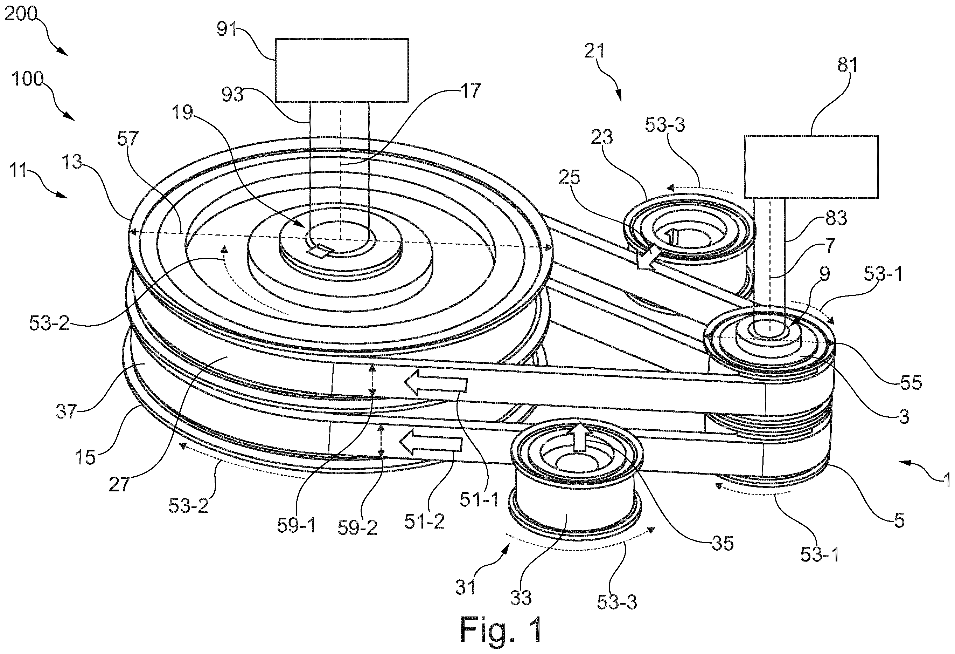

Fig. 1 illustrates a device 200 comprising an embodiment of a force transmission system 100 according to the present invention. The device 200 comprises a force or torque generating device 81, which has a rotating output shaft 83. The device 200 further comprises a force receiving device 91, which has a rotating input shaft 93.

The force transmission system 100 comprises a first pulley arrangement 1, which comprises a first main pulley 3 and a first auxiliary pulley 5. The first main pulley 3 and the first auxiliary pulley 5 are arranged in a stacked manner, such that the first main pulley 3 is arranged on top of the first auxiliary pulley 5. That is, an upper surface of the first auxiliary pulley 5 faces a lower surface of the first main pulley 3. In the depicted embodiment, the first auxiliary pulley 5 and the first main pulley 3 contact each other and rotate together, as is described further below. However, in different embodiments, the first auxiliary pulley 5 and the first main pulley 3 may be adapted to rotate independently from each other.

The first main pulley 3 and the first auxiliary pulley 5 are axially aligned with a first rotation axis 7, which forms accordingly a common rotation axis. The first main pulley 3 and the first auxiliary pulley 5 form a first shaft reception 9, which receives the output shaft 83. Thus, the output shaft 83 is operatively connected to each of the first main pulley 3 and the first auxiliary pulley 5 such that a rotational movement, force or torque could be transmitted from output shaft 83 to each of the first main pulley 3 and the first auxiliary pulley 5. The first main pulley 3 and the first auxiliary pulley 5 each have the same first pulley diameter 55. The first main pulley 3 is adapted to receive and engage a first belt 27 and the first auxiliary pulley 5 is adapted to receive and engage a second belt 37. The first main pulley 3 and the first auxiliary pulley 5 each rotate in a clockwise direction as indicated by the arrows 53-1. However, in different embodiments, the main pulley 3 and the first auxiliary pulley 5 may also rotate in a counterclockwise direction. Accordingly, also the first belt 27 and the second belt 37 may then revolve in a counterclockwise direction.

The force transmission system 100 comprises a second pulley arrangement 11, which comprises a second main pulley 13 and a second auxiliary pulley 15. The second main pulley 13 and the second auxiliary pulley 15 are arranged in a stacked manner, such that the second main pulley 13 is arranged on top of the second auxiliary pulley 15. That is, an upper surface of the second auxiliary pulley 15 faces a lower surface of the second main pulley 13. In the depicted embodiment, the second auxiliary pulley 15 and the second main pulley 13 contact each other and rotate together, as is described further below. However, in different embodiments, the second auxiliary pulley 15 and the second main pulley 13 may be adapted to rotate independently from each other.

The second main pulley 13 and the second auxiliary pulley 15 are axially aligned with a second rotation axis 17, which accordingly forms a common rotation axis. The second main pulley 13 and the second auxiliary pulley 15 form a second shaft reception 19, which receives the input shaft 93. Thus, the input shaft 93 is operatively connected to each of the second main pulley 13 and the second auxiliary pulley 15 such that a rotational movement, force, or torque could be transmitted from each of the second main pulley 13 and the second auxiliary pulley 15 to the input shaft 93. The second main pulley 13 and the second auxiliary pulley 15 each have the same second pulley diameter 57. In the depicted embodiment, the first pulley diameter 55 is smaller than the second pulley diameter 57. The second main pulley 13 is adapted to receive and engage the first belt 27 and the second auxiliary pulley 15 is adapted to receive and engage the second belt 37. The second main pulley 13 and the second auxiliary pulley 15 each rotate in a clockwise direction as indicated by the arrows 53-2.

The first belt 27 has a belt height 59-1 and revolves in a clockwise direction around the first main pulley 3 and the second main pulley 13 as indicated by the arrow 51-1.

A first roller arrangement 21 comprising a first roller 23 is arranged at the first belt 27 at a location essentially midways between a point where the first belt 27 disengages from the second main pulley 13 and a point where the first belt 27 engages the first main pulley 3. The first roller 23 rotates in a counterclockwise direction as indicated by the arrow 53-3 around an axis that is essentially parallel to the first rotation axis 7 and the second rotation axis 17. The first roller 23 applies a first preload 25 to the first belt 27 as indicated by the arrow 25 essentially perpendicular to the extension direction of the first belt 27 to provide a respective first pre-tension of the first belt 27. The first roller 23 rotates freely and accordingly does not contribute to the force transmission from the first pulley arrangement 1 to the second pulley arrangement 11.

The second belt 37 has a belt height 59-2 which is, in the depicted embodiment the same as the first belt height 59-1 and revolves in a clockwise direction around the first auxiliary pulley 5 and the second auxiliary pulley 15 as indicated by the arrow 51-2, which is the same revolving direction as the first belt 27.

A second roller arrangement 31 comprising a second roller 33 is arranged at the second belt 37 at a location essentially midways between a point where the second belt 37 disengages from the first auxiliary pulley 5 and a point where the second belt 37 engages the second auxiliary pulley 15. The second roller 33 rotates in an counterclockwise direction as indicated by the arrow 53-3 around an axis that is essentially parallel to the first rotation axis 7 and the second rotation axis 17. The second roller 33 applies a second preload 35 to the second belt 37 as indicated by the arrow 35 essentially perpendicular to the extension direction of the second belt 37 to provide a respective second pre-tension of the first belt 37. The second roller 33 rotates freely and accordingly does not contribute to the force transmission from the first pulley arrangement 1 to the second pulley arrangement 11.

The first belt 27 and the second belt 37 are provided with teeth at their inner surfaces for interlocking with corresponding teeth at the outer lateral surfaces of the pulleys. For example, the teeth may have a width of 9 mm and a depth or pitch of 5 mm.

In the depicted embodiment, the preload 25 applied to the first belt 27 is larger than the second preload 35 applied to the second belt 37. Accordingly, the second pre-tension of the second belt 37 is lower than the first pre-tension of the first belt 27.

The force transmission system 100 can assume a first configuration C1 wherein the first pulley arrangement 1 and the second pulley arrangement 11 are operatively coupled with each other by the first belt 27. Accordingly, a rotational force or torque is transmitted from the first main pulley 3 of the first pulley arrangement 1 to the second main pulley 13 of the second pulley arrangement 11 via the first belt 27. In detail, a rotational movement of the output shaft 83 is received by the first main pulley 3 and transmitted via the first belt 27 to the second main pulley 13 of the second pulley arrangement 11. The rotational movement of the second main pulley 13 is then accordingly be transferred to the input shaft 93. In the first configuration C1, the first pulley arrangement 1 and the second pulley arrangement 11 are also non-operatively coupled with each other via the second belt 37. Accordingly, substantially no rotational force or torque is transmitted from the first auxiliary pulley 5 of the first pulley arrangement 1 to the second auxiliary pulley 15 of the second pulley arrangement 11 via the second belt 37. Thus, due to the lower second pre-tension of the second belt 37, the second belt 37 only runs parallel and synchronized with the first belt 27, however without transferring substantial force between the first main pulley 3 and the second main pulley 13. In other words, substantially no load is transferred via the second belt 37 in the first configuration C1.

The force transmission system 100 can also assume an alternative second configuration C2, wherein the first pulley arrangement 1 and the second pulley arrangement 11 are operatively coupled with each other by the second belt 37. Accordingly, a rotational force or torque is then transmitted from the first auxiliary pulley 5 to the second auxiliary pulley 15 of the second pulley arrangement 11 via the second belt 37. In detail, a rotational movement of the output shaft 83 is received by the first auxiliary pulley 5 and transmitted via the second belt 37 to the second auxiliary pulley 15 of the second pulley arrangement 11. The rotational movement of the second auxiliary pulley 15 is then accordingly be transferred to the input shaft 93. Thus, contrary to the first configuration C1, a load is now transferred via the second belt 37 in the second configuration C2.

In the second configuration C2, the first pulley arrangement 1 and the second pulley arrangement 11 may be accordingly not coupled with each other or not operatively coupled with each other by the first belt 27. This may be for instance the case when the first belt 27 is damaged or fully teared such that no or only insufficient force could be transferred from the first main pulley 3 to the second main pulley 13.

Accordingly, a backup safety system is provided and a reliable operation of the force transmission 100 can be safeguarded even when the main pulley and belt arrangement fails. That is, when the first belt 27 tears, the second belt 37 takes over operation and accordingly allows to transfer a rotational force or movement of the output shaft 83 to the input shaft 93. Thus, for instance if the force receiving device 91 comprises a lift arm of a medical system, carrying a load, e.g. a patient bed, monitor trolleys, and other equipment outside healthcare solutions, an unintended stop or drop of the load is prevented by the backup engagement of the second belt 37. Thus, a safe operation is ensured even under failure of the first belt 27 transmission and the second belt 37 can immediately take over the operation even during operation of the device 200 without any further user input.

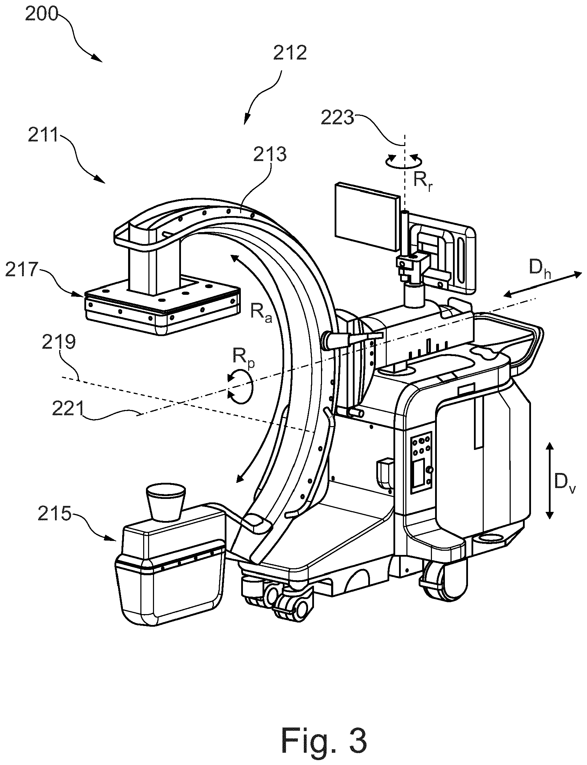

As is explained in further detail with respect to Fig. 3, the force transmission system 100 may also be switched back to the first configuration C1, for instance after the first belt 27 has been replaced or repaired.

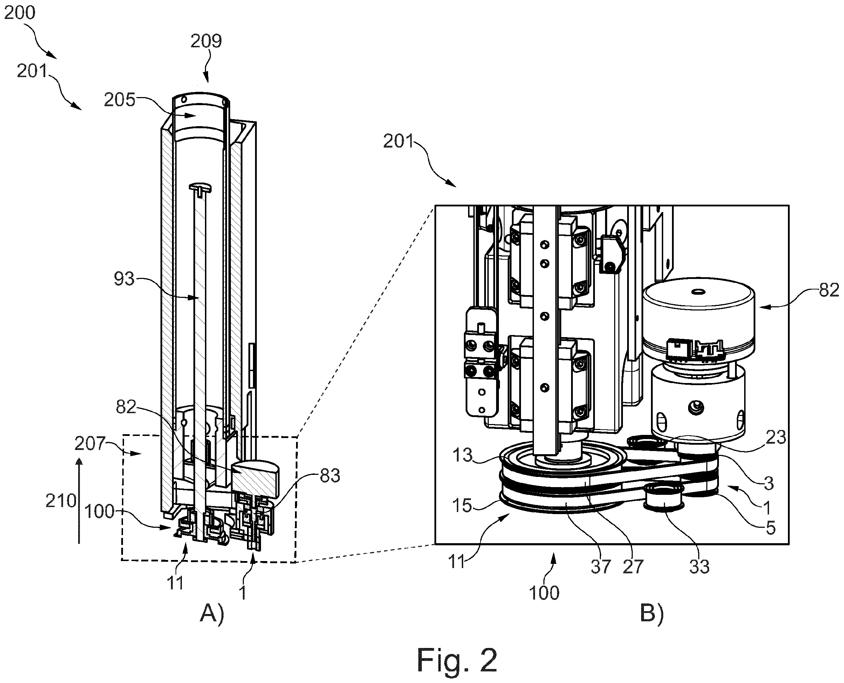

Fig. 2 schematically illustrates a device 200 comprising an embodiment of a force transmission system 100 according to the present invention. In the depicted embodiment, the device 200 is a height positioning module 201. Sub-figure A) depicts a cross-sectional view of the height positioning module 201 and sub-figure B) depicts a detailed view of the force transmission system 100 employed with the height positioning module 201, which is only partially hinted in sub-figure A). The force transmission system 100 essentially corresponds to the force transmission system 100 explained with respect to Fig. 1.

As depicted in sub-figure A), the height positioning module 201 comprises a rotational input shaft 93, which is in the depicted embodiment in form of a spindle, which is oriented in a vertical direction 210, and which is surrounded by a movable carriage 205, which is in the depicted embodiment in form of a tube. At a first carriage end 207, which is in the depicted embodiment a lower end of the carriage 205, the carriage 205 is mechanically connected to the rotational input shaft 93. The rotational input shaft 93 is a threaded shaft and the carriage 205 comprises inner elements having a corresponding thread, which engage the thread of the shaft. Thus, a rotational movement of the rotational input shaft 93 causes a translational movement of the carriage 205 along and against the vertical direction 210. At the second carriage end 209, a load, which may be a C-arc arrangement or assembly of a medical x-ray imaging system, is connected to the carriage 205, which can be accordingly translationally moved, i.e. lowered or lifted in the vertical direction 210.

In other embodiments, the rotational input shaft 93 and the carriage 205 may have a different orientation, for instance an orientation perpendicular to the vertical direction 210. Then, the height positioning module 201 may provide a respective horizontal movement of the carriage 205 perpendicular to the vertical direction 210. The height positioning module 201 comprises a motor 82, which has an output shaft 83 that is mechanically connected to the first pulley arrangement 1. Thus, the rotational movement of the output shaft 83 is received by the pulleys of the first pulley arrangement 1. In a first configuration, the first main 3 pulley transfers the torque or force provided by the motor 83 to the second main pulley 13 via the first belt 27. The second main pulley 13 then transfers the movement to the rotational input shaft 93, which in turn causes a translational movement of the carriage 205 along or against the vertical direction 210, dependent on the rotational direction of the rotational input shaft 93. In case of malfunction or tearing of the first belt 27, the torque or force provided by the motor 8 is transferred by the first auxiliary 5 pulley to the second auxiliary pulley 15 via the second belt 37. The second auxiliary pulley 15 then transfers the rotational movement to the rotational input shaft 93, which in turn causes the translational movement of the carriage 205 along or against the vertical direction 210. Thus, a reliable backup system is provided.

Fig. 3 schematically illustrates a device 200 comprising an embodiment of a force transmission system 100 (not depicted). The depicted device 200 is an x-ray imaging device 211 with a C-arc assembly 212 comprising a C-arm 213 at which an x-ray source 215 and x-ray detector 217 are mounted. The x-ray imaging device 211 comprises a height positioning module 201 (not depicted) as described with respect to Fig. 2, which provides a vertical movement Dv of the C-arm 213 along a third axis 223. That is, the C-arm 213 is mounted and carried on the second carriage end 209 of the movable carriage 205. Thus, the full load of the C-arc assembly 212 including the C-arm 213 and any parts mounted thereon is carried by the force transmission system 100 of the height positioning module 201. Accordingly, a backup system is realized by the dual belt and pulley system described herein, wherein, in case of failure of the main pulleys and/or the first belt 27, the auxiliary pulleys and the second belt 37 can take over operation.

The x-ray imaging device 211 further comprises a corresponding arrangement that provides a horizontal translational movement Dh of the C-arm 213 along a second axis 221. Further, the x-ray imaging device 211 comprises a corresponding arrangement that provides a rotational movement Rr of the C-arm 213 around the third axis 223. The arrangement accordingly differs from the height positioning module 201 previously described with respect to Fig. 2 by that a rotational movement (and not a translational movement) is provided. That is, the rotational movement provided by the second pulleys 13, 15 is not translated downstream to a translational movement but maintained and output as a rotational movement. For instance, the input shaft 93 of such an arrangement may accordingly rotate the C-arm 213. Similarly, the x-ray imaging device 211 comprises a corresponding arrangement that provides a first rotational movement Ra of the C-arm 213 around a first axis 219 perpendicular to the third axis 223. Similarly, the x-ray imaging device 211 comprises a corresponding arrangement that provides a second rotational movement Rp of the C-arm 213 around the second axis 221 perpendicular to the third axis 223 and the first axis 219. It is noted that, in the depicted embodiment, each movement of the C-arm 213 may be provided by a respective motor 82 and corresponding force transmission system 100. That is, in total five motors 82 and corresponding five force transmission systems 100 may be provided. However, also a different number of motors 82 and force transmission systems 100, such as one, two, three, four, six etc. motors 82 and force transmission systems 100 may be foreseen, dependent on the configuration of the device 200. For instance, in some embodiments, only one motor 82 and force transmission system 100 may be provided to enable two or more of the above-described movements of the C-arm 213.

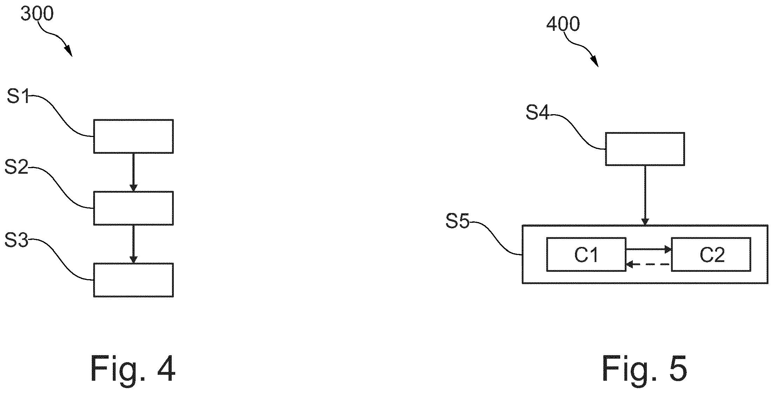

Fig. 4 schematically illustrates an embodiment of a method 300 of manufacturing a force transmission system 100 according to the present disclosure. The depicted method 300 comprises the step S1 of providing a first pulley arrangement 1 as described above. The method 300 further comprises the step S2 of providing a second pulley arrangement 11 according to the present disclosure. The method 300 further comprises the step S3 of coupling the first pulley arrangement 1 and the second pulley arrangement 11 with each other by a revolving first belt 27 and a revolving second belt 37, as described above. The depicted embodiment is merely exemplarily, and it will be appreciated that in different embodiments the method includes the step S2 of providing the second pulley arrangement 11, before or simultaneously with the step S1 of providing the first pulley arrangement 1. The first belt 27 is provided with a first pre-tension and the second belt 37 is provided with a second pre-tension, wherein the second pre-tension is lower than the first pre-tension. The first pre-tension and the second pre-tension may be accordingly set as desired or required by the device 200 and/or the force transmission system 100.

In one example, the diameter of the first main pulley 3 and the first auxiliary pulley 5 may be 95.5 mm. Further, the diameter of the second main pulley 13 and the second auxiliary pulley 15 may be 28.7 mm. The pre-tension may be determined for instance as described above via the formulas (I) to (III). In one example, for the first belt, $M_i$ for the first main pulley 3 may be 0.5, $d_i$ of the first main pulley 3 may be 28.7 mm, $F_c$ may be 34.9N, $A_t$ may be 1/3 and the pre-tension $F_v$ may be accordingly set to about 12 N. At the same time the pre-tension $F_v$ for the second belt 37 may be set to about 1.5 N. Accordingly, less wear and stress may be applied to the second belt during operation. However, in different embodiments, the first and second pre-tensions may also be varied dependent on the configuration and requirements of the force transmission system 100 and/or the device 200.

Fig. 5 schematically illustrates an embodiment of a use 400 of a force transmission system 100 according to the present disclosure. The use 400 comprises the step S4 of providing of a force transmission system 100 according to the present disclosure and the step S5 of changing a configuration of the force transmission system 100 from operating in the first configuration C1 to the second configuration C2, as described in detail above, for instance with respect to the embodiment of the force transmission system 100 of Fig. 1. As is depicted by the dotted arrow, the system may also be switched back from the second configuration C2 to the first configuration C1, for instance after the first belt 27 has been replaced or repaired. Thus, the system may be brought back to its initial condition.

Other variations to the disclosed embodiments can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage.

LIST OF REFERENCE SIGNS

| | |
|---|---|
| 1 | first pulley arrangement |
| 3 | first main pulley |
| 5 | first auxiliary pulley |
| 7 | first rotation axis |
| 9 | first shaft reception |
| 11 | second pulley arrangement |
| 13 | second main pulley |
| 15 | second auxiliary pulley |
| 17 | second rotation axis |
| 19 | second shaft reception |
| 21 | first roller arrangement |
| 23 | first roller |
| 25 | first pre-load |
| 27 | first belt |
| 31 | second roller arrangement |
| 33 | second roller |
| 35 | second pre-load |
| 37 | second belt |
| 51 | belt movement |
| 53 | pulley and roller rotation |
| 55 | first pulley diameter |
| 57 | second pulley diameter |
| 59 | belt height |
| 81 | force or torque generating device |
| 82 | motor |
| 83 | output shaft |
| 91 | force receiving device |
| 93 | input shaft |

| 100 | force transmission system |
|---|---|
| 200 | device |
| 201 | height position module |
| 205 | carriage |
| 207 | first carriage end |
| 209 | second carriage end |
| 210 | vertical direction |
| 211 | x-ray imaging device |
| 212 | C-arc assembly |
| 213 | C-arm |
| 215 | x-ray source |
| 217 | x-ray detector |
| Ra | first rotational movement |
| 219 | first axis |
| Rp | second rotational movement |
| 221 | second axis |
| Rr | third rotational movement |
| 223 | third axis |
| Dv | vertical movement |
| Dh | horizontal movement |
| 300 | method |
| C1 | first configuration |
| C2 | second configuration |
| S1 to S5 | method steps |

**Claims**

1. A force transmission system (100) comprising:

   a first pulley arrangement (1) coupleable to a force or torque generating device (81);
   a second pulley arrangement (11) coupleable to a force receiving device (91);
   a revolving first belt (27) and a revolving second belt (37);
   wherein the first pulley arrangement (1) and the second pulley arrangement (11) are coupleable with each other by the first belt (27) and the second belt (37);
   wherein the force transmission system (100) is adapted to assume a first configuration (C1) or a second configuration (C2);
   wherein, in the first configuration (C1), the first pulley arrangement (1) and the second pulley arrangement (11) are operatively coupled with each other by the first belt (27), and the first pulley arrangement (1) and the second pulley arrangement (11) are non-operatively coupled with each other by the second belt (37); and
   wherein, in the second configuration (C2), the first pulley arrangement (1) and the second pulley arrangement (11) are operatively coupled with each other by the second belt (37), and the first pulley arrangement (1) and the second pulley arrangement (11) are not coupled with each other or not operatively coupled with each other by the first belt (27).

2. The force transmission system (100) according to the preceding claim,

   wherein, in the first configuration (C1), the first belt (27) is provided with a first pre-tension and the second belt (37) is provided with a second pre-tension;
   wherein the second pre-tension is lower than the first pre-tension.

3. The force transmission system (100) according to the preceding claim, further comprising,

   a first roller arrangement (21) comprising a first roller (23) contacting the first belt (21) for applying a first pre-load (25) to the first belt (27) to provide the first pre-tension; and
   a second roller arrangement (31) comprising a second roller (33) contacting the second belt (37) for applying a second pre-load to the second belt (37) to provide the second pre-tension.

4. The force transmission system (100) according to one of the preceding claims 2 or 3,

wherein the first pre-tension is in a range of 1 N to 120 N, preferably in a range of 3 N to 60 N, more preferably in a range of 6 N to 30 N, for example about 12 N and/or
wherein the second pre-tension is in a range of 0.1 N to 10 N, preferably in a range of 0.5 N to 5 N, more preferably in a range of 1 N to 2 N, for example about 1.5 N.

5. The force transmission system (100) according to one of the preceding claims,

   wherein the first pulley arrangement (1) comprises a first main pulley (3) and a first auxiliary pulley (5),
   wherein the second pulley arrangement (11) comprises a second main pulley (13) and a second auxiliary pulley (15),
   wherein the first main pulley (3) and the first auxiliary pulley (5) are coupleable via the first belt (27), and
   wherein the second main pulley (13) and the second auxiliary pulley (15) are coupleable via the second belt (37).

6. The force transmission system (100) according to the preceding claim,

   wherein the first main pulley (3) and the first auxiliary pulley (5) are aligned with each other along a common first rotation axis (7), and/or
   wherein the second main pulley (13) and the second auxiliary pulley (15) are aligned with each other along a common second rotation axis (17).

7. The force transmission system (100) according to the preceding claim,

   wherein the first main pulley (3) and the first auxiliary pulley (5) are arranged in a stacked manner, and/or
   wherein the second main pulley (13) and the second auxiliary pulley (15) are arranged in a stacked manner.

8. The force transmission system (100) according to the preceding claim,

   wherein the first main pulley (3) and the first auxiliary pulley (5) form a first shaft reception (9) for receiving a rotational output shaft (83) of the force or torque generating device (81), and/or
   wherein the second main pulley (13) and the second auxiliary pulley (15) form a second shaft reception (19) for receiving a rotational input shaft (93) of the force receiving device (91).

9. The force transmission system (100) according to one of the preceding claims 5 to 8,

   wherein the first main pulley (3) and the first auxiliary pulley (5) have a same first pulley diameter (55),
   wherein the second main pulley (13) and the second auxiliary pulley (15) have a same second pulley diameter (57), and
   wherein the first pulley diameter (55) is smaller than the second pulley diameter (57).

10. A device (200) comprising:

    a force or torque generating device (81);
    a force receiving device (91); and
    the force transmission system (100) according to one of the preceding claims 1 to 9.

11. The device (200) according to the preceding claim,
    wherein the device (200) is a medical device, and in particular a medical imaging device.

12. The device (200) according to one of the preceding claims 10 or 11,

    wherein the force or torque generating device (81) comprises a motor (82) and a rotational output shaft (83) for transferring a rotational movement from the motor to the first pulley arrangement (1), wherein the motor is mechanically coupled with the first pulley arrangement (1) via the rotational output shaft (83), and
    wherein the force receiving device (91) comprises a rotational input shaft (93) for transferring a rotational movement from the second pulley arrangement (11) to the force receiving device (91).

13. The device (200) according to the preceding claim,
    wherein the device (200) includes a height position module (201) comprising:

a movable carriage (205), which is mechanically connected to the rotational input shaft (93) such that a rotational movement of the rotational input shaft (93) causes a translational movement of the carriage (205), and wherein the carriage (205) is adapted to carry a load similar to a C-arc assembly (212).

14. A method (300) of manufacturing a force transmission system (100) according to one of the preceding claims 1 to 9, comprising the steps of:

> providing (S1) a first pulley arrangement (1);
> providing (S2) a second pulley arrangement (11);
> coupling (S3) the first pulley arrangement (1) and the second pulley arrangement (11) with each other by a revolving first belt (27) and a revolving second belt (37);
> wherein the first belt (27) is provided with a first pre-tension and the second belt (37) is provided with a second pre-tension;
> wherein the second pre-tension is lower than the first pre-tension.

15. A use (400) of a force transmission system (100), comprising the steps of:

> providing (S4) of a force transmission system (100) according to one of the preceding claims 1 to 9, and
> changing (S5) a configuration of the force transmission system (100) from the first configuration (C1) to the second configuration (C2).

Fig. 1

Fig. 2

200

212

211

223

$R_r$

213

$R_a$

217

219

$R_p$

221

$D_h$

$D_v$

215

Fig. 3

EP 4 607 060 A1

S1

S2

S3

**Fig. 4**

300

S4

S5

C1 → C2

**Fig. 5**

400

Europäisches
Patentamt

European
Patent Office

Office européen
des brevets

## EUROPEAN SEARCH REPORT

**Application Number**

EP 24 15 9301

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 367 696 A1 (DELPHI TECH INC [US]) 3 December 2003 (2003-12-03) | 1,5-10, 12,15 | INV. F16H7/02 |
| Y | * paragraphs [0019], [0022]; figures 2,3 * | 11,13 | |
| | ----- | | |
| X | US 10 907 602 B1 (BASILE JAMES M [US] ET AL) 2 February 2021 (2021-02-02) * claims 1-16; figures 3,4 * | 1-10,14, 15 | |
| | ----- | | |
| Y | WO 2010/128417 A1 (KONINKL PHILIPS ELECTRONICS NV [NL]; MEEK GERRIT J [NL] ET AL.) 11 November 2010 (2010-11-11) * figure 1 * | 11,13 | |
| | ----- | | |
| A | BE 1 012 955 A6 (VANDEN DRIESSCHE JEAN [BE]; BOEDT ANATOLE) 5 June 2001 (2001-06-05) * abstract; figure 1 * | 1-15 | |
| | ----- | | |

TECHNICAL FIELDS
SEARCHED (IPC)

F16H

The present search report has been drawn up for all claims

| Place of search | Date of completion of the search | Examiner |
|---|---|---|
| Munich | 9 April 2024 | Hassiotis, Vasilis |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 9301

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2024

| Patent document cited in search report | Publication date | Patent family member(s) | Publication date |
|---|---|---|---|
| EP 1367696 A1 | 03-12-2003 | EP 1367696 A1<br>US 2003224888 A1 | 03-12-2003<br>04-12-2003 |
| US 10907602 B1 | 02-02-2021 | CN 112572128 A<br>DE 102020125156 A1<br>US 10907602 B1 | 30-03-2021<br>01-04-2021<br>02-02-2021 |
| WO 2010128417 A1 | 11-11-2010 | CN 102421364 A<br>EP 2427110 A1<br>JP 6030110 B2<br>JP 2012525899 A<br>JP 2015062729 A<br>PL 2427110 T3<br>RU 2011149780 A<br>US 2012106701 A1<br>WO 2010128417 A1 | 18-04-2012<br>14-03-2012<br>24-11-2016<br>25-10-2012<br>09-04-2015<br>30-09-2014<br>20-06-2013<br>03-05-2012<br>11-11-2010 |
| BE 1012955 A6 | 05-06-2001 | NONE | |

EPO FORM P0459

For more details about this annex : see Official Journal of the European Patent Office, No. 12/82